# EUROPEAN PATENT APPLICATION

(11) **EP 4 633 283 A1**
(43) Date of publication of application: **15.10.2025**
(21) Application number: 24744895.4
(22) Date of filing: 18.01.2024
(51) Int. Cl.: H04W 76/28, H04W 24/08, H04W 72/23, H04W 52/02

(54) **METHOD AND APPARATUS FOR PERFORMING CELL DTX AND/OR CELL DRX IN WIRELESS COMMUNICATION SYSTEM**

(30) Priority: 19.01.2023 KR 20230008077; 16.01.2024 KR 20240006666
(71) Applicant: KT Corporation, Seongnam-si, Gyeonggi-do 13606 (KR)
(72) Inventor: HONG, Sung Pyo, Seongnam-si, Gyeonggi-do 13606 (KR)
(74) Representative: BCKIP Part mbB
(86) International application number: PCT/KR2024/000884
(87) International publication number: WO 2024/155115

(57) **Abstract**

Provided are a method and apparatus for performing cell DTX and/or cell DRX in a wireless communication system. The method may include receiving cell discontinuous transmission (DTX) and cell discontinuous reception (DRX) configuration information, receiving an activation operation of cell DTX and/or cell DRX based on the cell DTX and cell DRX configuration information, and monitoring a physical downlink control channel (PDCCH) after performing the activation operation of the cell DTX and/or the cell DRX, in which the monitoring of the PDCCH is performed based on active time of the cell DTX.

## Description

### Technical Field

The present disclosure relates to a 3GPP 5G NR system.

### Background Art

As more communication devices require greater communication traffic, necessity for a next generation 5G system, which is enhanced compared to a legacy LTE system, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, eMBB corresponds to a next generation mobile communication scenario having characteristics such as high spectrum efficiency, high user experienced data rate, high peak data rate, and the like. URLLC corresponds to a next generation mobile communication scenario having characteristics such as ultra-reliable, ultra-low latency, ultra-high availability, and the like (e.g., V2X, Emergency Service, Remote Control). mMTC corresponds to a next generation mobile communication scenario having characteristics such as low cost, low energy, short packet, and massive connectivity (e.g., IoT).

### Disclosure of Invention

### Technical Problem

One disclosure of the present specification is to provide a method and apparatus for efficiently performing operations related to cell discontinuous transmission (DTX) and cell discontinuous reception (DRX) configured in a wireless communication system.

### Solution to Problem

In accordance with an embodiment, the present disclosure provides a method of operating a user equipment (UE) in a wireless communication system. The method may include receiving receiving cell discontinuous transmission (DTX) and cell discontinuous reception (DRX) configuration information, performing an activation operation of cell DTX and/or cell DRX, based on the cell DTX and cell DRX configuration information, and monitoring a physical downlink control channel (PDCCH) after performing the activation operation of the cell DTX and/or the cell DRX, in which the monitoring of the PDCCH is performed based on active time of the cell DTX.

In accordance with another embodiment, the present disclosure provides a communication apparatus in a wireless communication system, including at least one processor; and at least one memory configured to store instructions and operably electrically connectable to the at least one processor. The operations performed based on the instructions executed by the at least one processor may include: receiving cell discontinuous transmission (DTX) and cell discontinuous reception (DRX) configuration information; performing an activation operation of cell DTX and/or cell DRX, based on the received cell DTX and cell DRX configuration information; and monitoring a physical downlink control channel (PDCCH) after performing the activation operation of the cell DTX and/or the cell DRX, in which the monitoring of the PDCCH is performed based on active time of the cell DTX.

The cell DTX and cell DRX configuration information may be configured with at least one parameter based on a combination of a parameter for the cell DTX and a parameter for the cell DRX, and the at least one combined parameter may include at least one of a cell DTX-DRX cycle, a cell DTX-DRX On Duration timer, a cell DTX-DRX start offset, and a cell DTX-DRX slot offset.

The activation operation of the cell DTX and/or the cell DRX may be performed based on signaling of radio resource control (RRC) or signaling of group common downlink control information (DCI). Here, the group common DCI may be scrambled by a cell group specific radio network temporary identifier (RNTI) for network energy savings (NES).

Meanwhile, the active time may correspond to time in which a cell DTX-DRX On Duration timer is running, and the cell DTX-DRX On Duration timer may be started based on a remainder of a modulo operation obtained by dividing a value, which is obtained by adding a subframe number after multiplying a system frame number (SFN) by '10,' by a cell DTX-DRX cycle.

In addition, the cell DTX-DRX On Duration timer may start after a cell DTX-DRX slot offset from the beginning of the subframe when the remainder of the modulo operation becomes equal to the cell DTX-DRX On Duration start offset.

### Advantageous Effects of Invention

According to the embodiments of the disclosure, in the wireless communication system, the base station provides the cell DTX and/or DRX configuration to the UE(s) connected to the corresponding cell, and the UE performs related operations efficiently.

### Brief Description of Drawings

FIG. 1 illustrates a wireless communication system.
FIG. 2 illustrates a structure of a radio frame used in NR.
FIGS. 3A to 3C illustrate exemplary architectures for a wireless communication service.
FIG. 4 illustrates a slot structure of a new radio (NR) frame.
FIG. 5 shows an example of a subframe type in NR.
FIG. 6 illustrates a structure of a self-contained slot.
FIG. 7 illustrates an example of a DRX cycle.
FIG. 8 illustrates an example of operations of a cell DTX/DRX and a UE DRX according to an embodiment of the disclosure.
FIG. 9 illustrates an example of operations of a base station and a UE according to an embodiment of the present disclosure.
FIG. 10 shows apparatuses according to an embodiment of the disclosure.
FIG. 11 is a block diagram showing a configuration of a terminal according to an embodiment of the disclosure.
FIG. 12 is a configuration block diagram of a processor in which the disclosure is implemented.
FIG. 13 is a detailed block diagram of a transceiver of a first apparatus shown in FIG. 10 or a transceiving unit of an apparatus shown in FIG. 11.

### Mode for the Invention

The technical terms used herein are intended to merely describe specific embodiments and should not be construed as limiting the disclosure. Further, the technical terms used herein should be, unless defined otherwise, interpreted as having meanings generally understood by those skilled in the art but not too broadly or too narrowly. Additionally, the technical terms used herein, which are determined not to exactly represent the spirit of the disclosure, should be replaced by or understood by such technical terms as being able to be exactly understood by those skilled in the art. Finally, the general terms used herein should be interpreted in the context as defined in the dictionary, but not in an excessively narrowed manner.

The expression of the singular form in the disclosure includes the meaning of the plural form unless the meaning of the singular form is definitely different from that of the plural form in the context. In the following description, the term 'include' or 'have' may represent the existence of a feature, a number, a step, an operation, a component, a part or the combination thereof described in the disclosure and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts that are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to include its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features described individually in one drawing in this specification may be implemented separately or at the same time.

In the accompanying drawings, user equipment (UE) is illustrated by way of example, but the illustrated UE may be also referred to as a terminal, mobile equipment (ME), or the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (e.g., a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), a repeater(relay), and so on.

Although embodiments of the disclosure will be described based on an LTE system, an LTE-advanced (LTE-A) system, and an NR system, such embodiments may be applied to any communication system corresponding to the aforementioned definition.

### <Wireless Communication System>

With the success of long term evolution (LTE)/LTE-A (LTE-Advanced) for the 4th generation mobile communication, the next generation, i.e., 5^{th} generation (so called 5G) mobile communication has been commercialized and the follow-up studies are also ongoing.

The 5^{th} generation mobile communications defined by the International Telecommunication Union (ITU) refers to communication providing a data transmission rate of up to 20 Gbps and a minimum actual transmission rate of at least 100 Mbps anywhere. The official name of the 5^{th} generation mobile telecommunications is 'IMT-2020.'

The ITU proposes three usage scenarios, namely, enhanced Mobile Broadband (eMBB), massive Machine Type Communication (mMTC) and Ultra Reliable and Low Latency Communications (URLLC).

The URLLC relates to a usage scenario that requires high reliability and low latency. For example, services such as autonomous driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and reduce battery consumption compared to a 4G mobile communication system to better implement the Internet of things. A new radio access technology (new RAT or NR) may be proposed for such 5G mobile communication.

An NR frequency band is defined as two types of frequency ranges: FR1 and FR2. The numerical value in each frequency range may vary, and the frequency ranges of the two types FR1 and FR2 may for example be shown in Table 1 below. For convenience of description, FR1 among the frequency ranges used in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may vary in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, such as, vehicle communication (e.g., autonomous driving). Meanwhile, the 3GPP communication standards define downlink (DL) physical channels corresponding to resource elements (REs) carrying information originated from a higher layer, and DL physical signals which are used in the physical layer and correspond to REs that do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An reference signal (RS), also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

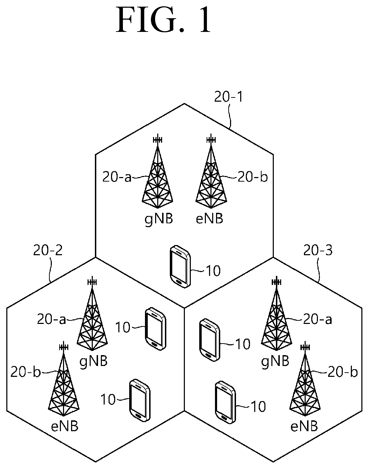

**FIG. 1** **illustrates a wireless communication system.**

Referring to FIG. 1, the wireless communication system includes at least one base station (BS). The BS includes a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be performed simultaneously. In a TDD system in which uplink transmission and downlink transmission are divided in subframe units, uplink transmission and downlink transmission are performed in different subframes.

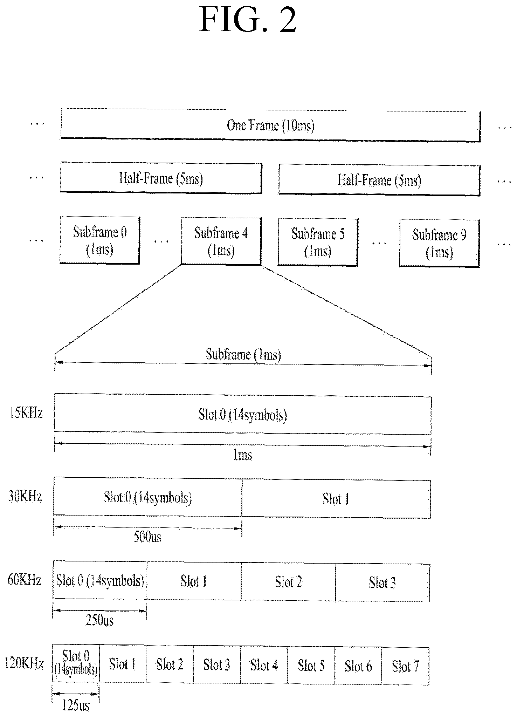

**FIG. 2** **illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

### <Support of Various Numerologies>

With the development of wireless communication technology, multiple numerologies may be available to UEs in the NR system. For example, in the case where a subcarrier spacing (SCS) is 15 kHz, a wide area of the typical cellular bands is supported. In the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a subcarrier spacing (SCS). A single cell can provide a plurality of numerologies to UEs. When an index of a numerology is represented by µ, a subcarrier spacing and a corresponding CP length may be expressed as shown in the following table.

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

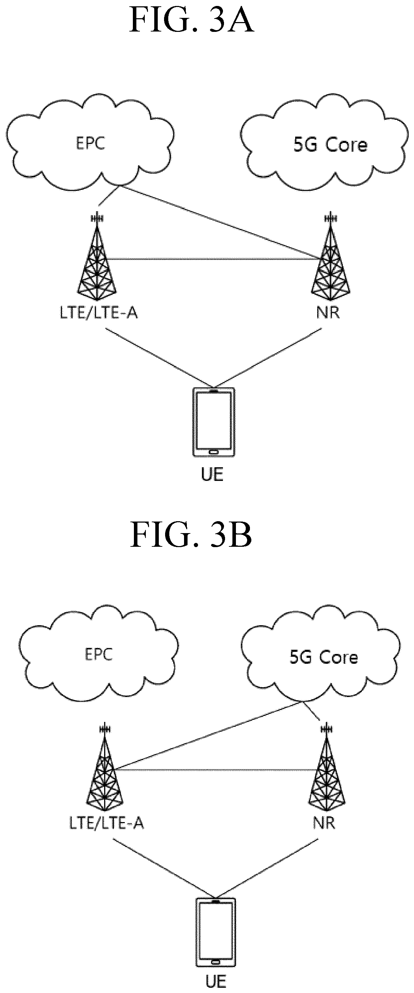

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

Referring to FIG. 3B, the LTE/LTE-A cell is connected with a core network for 5^{th} generation mobile communication, that is, a 5G core network, unlike the example in FIG. 3A.

A service based on the architecture shown in FIGS. 3A and 3B is referred to as a non-standalone (NSA) service.

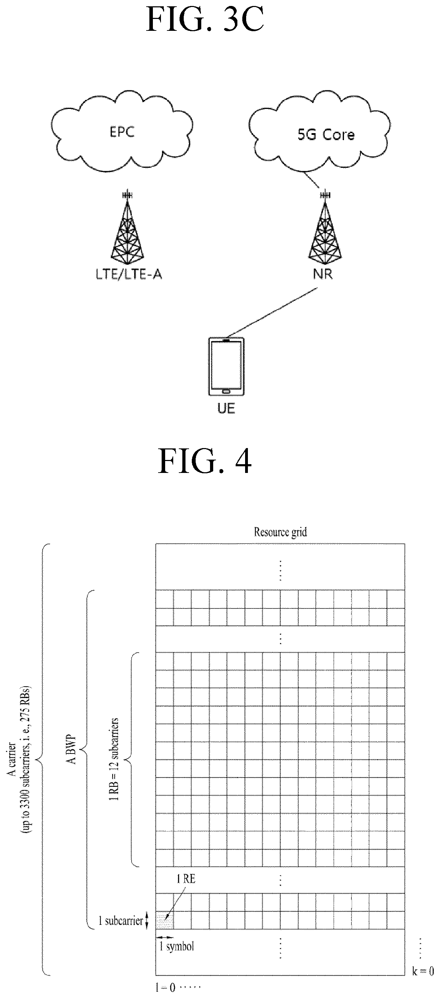

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to both paired and not-paired spectrums. A pair of spectrums indicates including two subcarriers for downlink and uplink operations. For example, one subcarrier in one pair of spectrums may include a pair of a downlink band and an uplink band.

**FIG. 4** **illustrates a slot structure of an NR frame.**

A slot includes a plurality of symbols in the time domain. For example, in the case of the normal CP, one slot includes seven symbols. On the other hand, in the case of an extended CP, one slot includes six symbols. A carrier includes a plurality of subcarriers in the frequency domain. A resource block (RB) is defined as consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in both the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

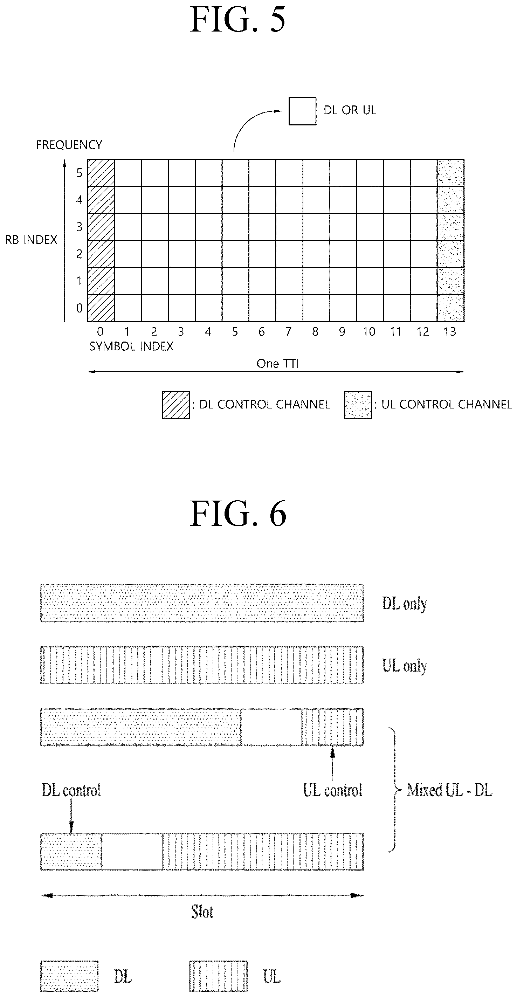

**FIG. 5** **shows an example of a subframe type in NR.**

Referring to FIG. 5, a TTI (Transmission Time Interval) may be called a subframe or a slot for NR (or new RAT). The subframe (or slot) shown in FIG. 5 can be used in a TDD system of NR (or new RAT) to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as the DL control region) in a slot may be used to transmit a DL control channel, and the last M symbols (hereinafter referred to as the UL control region) in the slot may be used to transmit a UL control channel. N and M are integers greater than 0. A resource region between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception may be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

**FIG. 6** **illustrates a structure of a self-contained slot.**

In the NR system, the frame has a self-contained structure, in which all of a DL control channel, DL or UL data channel, UL control channel, and other elements are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource region between the DL control region and the UL control region (hereinafter referred to as a data region) may be used for DL data transmission or UL data transmission. For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

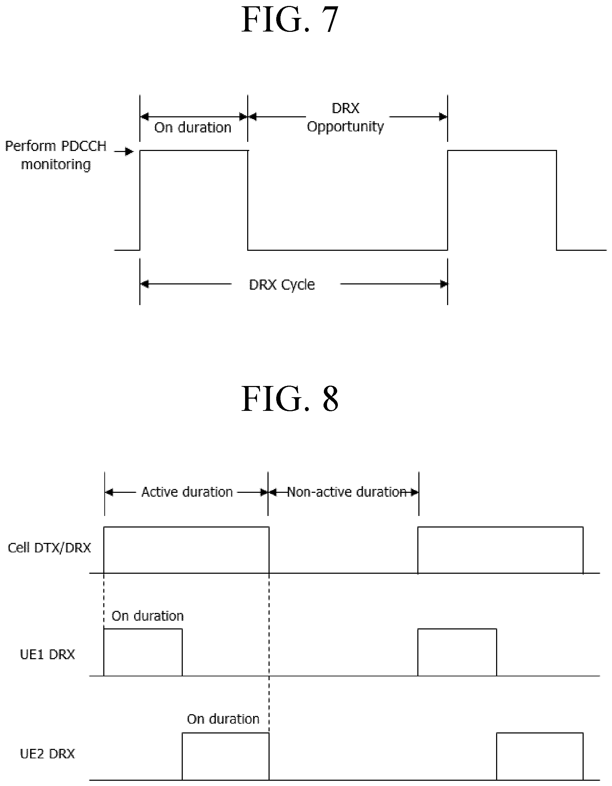

**FIG. 7** **illustrates an example of a DRX cycle.**

Referring to FIG. 7, a UE uses DRX to save power. When DRX is configured, the UE does not need to continuously perform PDCCH monitoring. In other words, the UE attempts to receive the PDCCH only within the configured time duration and does not attempt to receive the PDCCH outside the configured time duration. The duration during which the UE performs the PDCCH monitoring is referred to as an 'On Duration,' and the On Duration is defined once per DRX period.

The DRX operation includes the following features.
- On Duration: Duration during which the UE waits to receive the PDCCH after waking up. If the UE successfully decodes the PDCCH, the UE stays awake and starts an Inactivity Timer.
- Inactivity Timer: A timer indicating a duration following the last successful PDCCH decoding, during which the UE monitors for subsequent PDCCHs and transitions to sleep upon a decoding failure. The UE needs to restart the Inactivity Timer after successfully decoding the PDCCH only for the first transmission (i.e., not for retransmission).
- Retransmission Timer: A timer indicating a duration until an expected retransmission occurs.
- Cycle: indicates a periodic repetition of the On duration and a subsequent possible inactivity period.
- Active Time: The overall duration in which the UE monitors the PDCCH, including the On Duration of the DRX cycle, the period during which the UE continues reception while the Inactivity Timer us running, and the period while waiting for a retransmission occasion.

### <Disclosures of the present specification>

The present disclosure discloses network-side DTX and UE-side DRX operations for reducing consumption in the network and the UE.

The network energy saving is critical for environmental sustainability and operating cost reduction. As communication technology develops, networks are evolving toward higher density, utilizing more antennas and broader bandwidths to handle advanced services and applications that require very high data transmission rates. According to a report from the Global System for Mobile Communications Association (GSMA), the energy costs of mobile networks may account for up to 23% of total operating costs. The energy is consumed in a wireless access network, in particular, in active antenna units. The power consumption of wireless access is divided into two parts: a dynamic part that occurs during active data transmission and/or reception, and a static part that is continuously consumed to maintain essential operations of the wireless access equipment, regardless of data activity. As potential technology for the network energy saving, discontinuous transmission (DTX) and/or discontinuous reception (DRX) may be considered in cell(s) associated with the base station. Thus, the base station may have an occasion to turn off data transmission/reception and/or reference signal transmission/reception by setting a configured inactive duration. During the inactive period, the base station may prevent transmission/reception of some periodic signals/channels, such as common channels/signals or UE-specific signals/channels. The base station may either prevent any transmission/reception or maintain limited transmission/reception, thereby saving energy consumed by the network.

To save energy in the network, the foregoing cell-specific DTX/DRX may be used to set the inactive time/duration (e.g., period) during which the base station does not perform data transmission/reception, but there are no specific configuration methods and procedures considering the UE(s) connected to the corresponding cell.

Therefore, the disclosure provides a specific configuration method and device for the network/cell DTX/DRX function applicable to the UE, and provides the network/cell DTX/DRX function in alignment with the DRX configured for a UE in a connected state.

Hereinafter, a method of providing network/cell/bandwidth part (BWP) DTX/DRX based on the 5G System (5GS)/NR will be described in detail. However, this is for the convenience of description, and the contents disclosed in the present specification may be applied to any system/wireless access technology (e.g., LTE and 6G). Regarding the contents disclosed in the present specification, reference may be made to the standards, for example, 3GPP TS 38.321 V17.3.0 and TS 38.331 V17.3.0.

**FIG. 8** **illustrates an example of operations of a cell DTX/DRX and a UE DRX according to an embodiment of the disclosure.**

Referring to FIG. 8, the cell DTX/DRX may be configured for the cell linked to the base station. The cell DTX/DRX may be classified according to an active duration and a inactive duration, and the base station and the UE may perform transmission and reception of data and/or a signal in the active duration of the cell DTX/DRX and may not perform transmission and reception of data and/or signal in the inactive duration of the cell DTX/DRX.

Meanwhile, the UE DRX may be defined and performed within the active duration of the cell DTX/DRX. In other words, the PDCCH monitoring based on the UE DRX may be performed during the On Duration within the active duration of the cell DTX/DRX. The On Duration of the UE DRX (UE1 DRX and UE2 DRX) may be configured to either overlap or remain non-overlapping within the active duration of the cell DTX/DRX.

FIG. 8 illustrates that the start or end of the On Duration of each UE DRX coincides with the start or end of the active duration of the cell DTX/DRX. However, this is merely an example, and the start or end of the On Duration of the UE DRX may be non-coincident with the start or end of the active duration of the cell DTX/DRX. In other words, the On Duration of the UE DRX may be configured to occupy any portion within the active duration of the cell DTX/DRX. Alternatively, the start or end of the On Duration of the UE DRX may be configured to be offset from the start or end of the active duration of the cell DTX/DRX.

Further, although not shown in FIG. 8, the cell DTX and the cell DRX may be configured independently of each other. In other words, the cell DTX and the cell DRX may be configured to have their own active and inactive durations, respectively.

Hereinafter, embodiments of the disclosure will be described in detail.

Any function disclosed in this disclosure may be defined as individual UE capability (UE radio capability or UE Core network capability) and transmitted to the base station/core network entity (e.g., Access and Mobility Management Function (AMF) and/or Session Management Function (SMF)) through signaling by the UE. Alternatively, any such functions may be combined and defined as the capability of the UE and transmitted to the base station/core network entity through signaling by the UE.

For any function or combination of functions disclosed in this disclosure, the base station may transmit/instruct information indicating the allowance/support/pre-configuration of the corresponding function/function combination to the UE through an RRC message. For example, the base station may instruct the UE before or after configuring/applying the corresponding function/function combination or simultaneously with the instruction for configuring/applying the corresponding function/function combination. The corresponding RRC message may be broadcasted through the system information. Alternatively, the instruction may be made to the UE through a dedicated RRC message (e.g., an RRC reconfiguration message).

Further, the functions disclosed in this disclosure may be performed individually and/or independently. The functions described in this disclosure may be arbitrarily combined and implemented, and it is understood that the combined functions are also included in the scope of the disclosure. For example, one or more functions may be applied simultaneously.

### Signaling/Notification/Instruction of Cell/Carrier/Base Station DTX/DRX Configuration

To save the network energy (energy in the network) and/or reduce the UE power consumption, the base station/central unit (CU)/distributed unit (DU) may provide the cell DTX/DRX function. During the cell DTX/DRX, the base station may not perform any transmission/reception in the cell. Alternatively, only limited transmission/reception may be maintained. For the convenience of description, when the base station may turn off any/specific data transmission/reception and/or any/specific reference signal transmission/reception according to the cell DTX/DRX and discontinuously transmit/receive the data/reference signal/signal/channel, this will be denoted as the cell DTX/DRX. Further, the time/period/duration/interval/ during which the base station turns off any/specific data transmission/reception and/or any/specific reference signal transmission/reception according to the cell DTX/DRX will be denoted as the cell DTX/DRX non-Active Time/period/duration/interval. This is merely for the convenience of description and may also be denoted as DTX/DRX inactive time/period/duration/interval, DTX/DRX Off time/period/duration/interval. For the convenience of description, a cell level DTX/DRX function will be described. However, this is merely for the convenience of description, it is obvious that DTX/DRX functions of other granularities capable of providing the DTX/DRX are also included in the scope of the present specification. For example, a BWP level DTX/DRX function, a cell group level DTX/DRX function, and a base station level DTX/DRX function are also included in the scope of the disclosure.

The base station may notify/instruct the UE of the corresponding cell DTX/DRX configuration through RRC signaling (e.g., system information, an RRC reconfiguration message, an RRC resume message, an RRC setup message, and a Paging message). Further, any layer 1 (L1)/layer 2 (L2)/layer 3 (L3) signaling (e.g., the UE-specific PDCCH, group-common PDCCH, medium access control (MAC) control element (CE), and RRC) may be used for activity/inactivity.

For example, the base station may broadcast the cell DTX/DRX configuration through the system information. The base station may use a short message transmitted on a PDCCH using a Paging-Radio Network Temporary Identifier (P-RNTI) with or without the associated paging message to instruct the addition/modification of the cell DTX/DRX configuration. For example, bit 1 (systemInfoModification) in the Short Message field in a downlink control information (DCI) format 1_0 may be used to instruct the connected state UE to receive and apply the corresponding configuration. As another example, a bit distinguished from the bit 1 (systemInfoModification) is defined instruct addition/modification of the cell DTX/DRX configuration, in the Short Message field within the DCI format 1_0 to instruct the connected state UE to receive and apply the corresponding configuration. For another example, the UE supporting the cell DTX/DRX function may be instructed according to the states of the UE. The UE may be instructed through an RRC reconfiguration message when the UE is in an RRC connected state, through an RRC resume message when the UE transitions from the RRC inactive state to the connected state, and through an RRC setup message when the UE transitions from an RRC idle state to the connected state.

The cell DTX/DRX configuration may be configured/instructed as being divided into a cell DTX mode and a cell DRX mode. For example, the cell DTX configuration for the downlink (DL) transmission/reception of the base station/UE and the cell DRX configuration for controlling the uplink (UL) transmission of the UE may be configured independently. The cell DTX configuration may include at least one parameter among DTX cycle/period, DTX start offset, DTX slot offset, DTX On Duration/Active Time, DTX On Duration/Active Time timer, DTX Off Duration/non-Active Time, and DTX non-active/Off Duration timer. The cell DRX configuration may include at least one parameter among DRX cycle/period, DRX start offset, DRX slot offset, DRX On Duration/Active Time, DRX On Duration/Active Time timer, DRX Off Duration/non-Active Time, DRX non-active/Off Duration timer. Alternatively, the cell DTX mode and the cell DRX mode may be combined/associated to be configured/instructed. The combined/associated cell DTX/DRX configuration may include at least one parameter among DTX/DRX cycle/period, DTX/DRX start offset, DTX/DRX slot offset, DTX/DRX On Duration/Active Time, DTX/DRX On Duration/Active Time timer, DTX/DRX Off Duration/non-Active Time, and DTX/DRX non-active/Off Duration timer. In this way, when the cell DTX/DRX is combined/associated to be configured, the parameter for the cell DTX configuration and the parameter for the cell DRX configuration may be configured as one combined parameter. At least one parameter included in the combined/associated cell DTX/DRX configuration of when the cell DTX/DRX is combined/associated to be configured may be set to have the same value as at least one parameter included in the cell DTX configuration and the cell DRX configuration used when configured/instructed as divided into the cell DTX mode and the cell DRX mode.

One or more (or a plurality of) DTX/DRX configurations may be instructed/configured to the UE. To distinguish the corresponding DTX/DRX configuration, index information may be included. The base station may make instruction by including at least one of an index for distinguishing the corresponding DTX/DRX configuration and an index (e.g., a serving cell index, or a secondary cell (SCell) index) for distinguishing the cells to which the corresponding cell DTX/DRX is applied, in an L3(RRC message)/L2(MAC CE)/L1(DCI) signaling for adding/modifying/changing/activating/inactivating the corresponding DTX/DRX configuration. The UE may instruct acknowledgement of the foregoing L3(RRC message)/L2(MAC CE)/L1(DCI) signaling to the base station. The L3(RRC message)/L2(MAC CE)/L1(UCI) signaling for instructing the corresponding acknowledgement may be instructed with at least one of the index for distinguishing the corresponding cell DTX/DRX configuration and the index for distinguishing the cell to which the corresponding cell DTX/DRX configuration is applied.

For example, the base station may instruct the activity/inactivity for the cell DTX/DRX through group/cell-common L1/L2 signaling for the network energy savings (NES) (e.g., a group-common PDCCH, a cell-common PDCCH, a cyclic redundancy check (CRC) scrambled PDCCH/PDSCH by a group-common or cell-common or cell/group-common RNTI for the NES, MAC CE instructed by the CRC scrambled PDSCH by the group-common or cell-common or cell/group-common RNTI for the NES). The UE(s) connected to the corresponding cell may instruct (e.g., transmit) the acknowledgement of the corresponding signaling reception to the base station. With this, the base station may effectively perform the retransmission for the UE(s) that did not receive the corresponding signaling. The acknowledgement signaling for the corresponding signaling may be instructed to the base station through one of the PUCCH/UCI/HARQ feedback/MAC-CE. The timing for the corresponding acknowledgement signaling may be dynamically instructed through the DCI or provided semi-statically in the RRC configuration. When the UE does not receive the L1/L2 signaling for instructing the cell DTX/DRX activity/inactivity, the base station may retransmit the corresponding L1/L2 signaling information to the UE through the group/cell-common L1/L2 signaling or the UE-specific L1/L2 signaling (e.g., MAC CE instructed by the UE-specific PDCCH or the PDSCH scrambled by Cell-RNTI (C-RNTI)). For another example, the base station may instruct the UE with an RRC reconfiguration message including the instruction information to activate the cell DTX/DRX. The UE connected to the corresponding cell may instruct/transmit the acknowledgment of the corresponding signaling reception to the base station through the RRC reconfiguration complete message.

### Cell/Carrier/Base Station DTX/DRX Mode Configuration and Related Information

The UE supporting the cell DTX/DRX function may flexibly discontinuously transmit/receive the data by distinguishing the corresponding cell DTX/DRX modes according to the operator's decision/selection/setting.

For example, one or more cell DTX/DRX modes may be defined.

The network may instruct at least one among i) information (e.g., index) for distinguishing/identifying the corresponding cell DTX/DRX mode, ii) information for distinguishing a channel/signal/scheduling associated with the corresponding cell DTX/DRX, and iii) information for configuring the channel/signal/scheduling associated with the cell DTX/DRX to the UE. The corresponding cell DTX/DRX mode may include at least one of the following modes.
- DTX/DRX mode 1: The base station turns off all transmission and reception for data traffic (e.g., at least one among user plane (UP) data (DTCH, MTCH), control plane (CP) data (DCCH, MCCH), DL-SCH, UL-SCH, PDCCH and PDSCH for the data traffic scheduling, PUCCH and PUSCH for data traffic transmission acknowledgement) and a reference signal during the Cell DTX/DRX non-Active Time/durations/periods.
- DTX/DRX mode 2: The base station turns off its transmission/reception only for the data traffic during the Cell DTX/DRX non-Active Time/durations/periods, i.e. gNB will still transmit/receive reference signals.
- DTX/DRX mode 3: The base station turns off its dynamic transmission/reception during the Cell DTX/DRX non-Active Time/durations/periods, i.e. gNB is expected to still perform transmission/reception in periodic resources, including SPS, CG-PUSCH, SR, RACH, and SRS).
- DTX/DRX mode 4: The base station turns on its transmission only for any/specific reference signal (e.g., CSI-RS for measurement) during the Cell DTX/DRX non-Active Time/duration/period.
- DTX mode 1: The base station turns off all transmission for data traffic and the reference signal during the cell DTX non-active period.
- DTX mode 2: The base station turns off its transmission only for data traffic during the Cell DTX non-active periods, i.e. gNB will still transmit/receive reference signals.
- DTX mode 3: The base station turns off its dynamic transmission during the Cell DTX non-active periods, i.e. gNB is expected to still perform transmission/reception in periodic resources, including SPS, CG-PUSCH, SR, RACH, and SRS).
- DTX mode 4: During the cell DTX non-active period, the base station turns on its transmission only for any/specific reference signal (e.g., CSI-RS for measurement) during the Cell DTX non-active period.

The UE may operate by distinguishing/considering/interpreting the corresponding DTX/DRX mode based on the instructed/received information. For example, when the cell DTX/DRX is configured (e.g., when the cell DTX/DRX mode 1 is configured), the UE may stop/skip/not perform at least one of the operations, such as PDCCH monitoring, CSI measurement, beam management, and radio resource management (RRM) measurement in the corresponding cell during the corresponding Cell DTX/DRX Off Duration/non-Active Time. Alternatively, when the cell DTX/DRX is configured (e.g., when the cell DTX/DRX mode 1 is configured), the UE may suspend/skip/cancel/release/discard/ignore/not transmit the configured/instructed/ received UL grant (e.g., configured grant (CG))/RACH /consider the corresponding resource as invalid/consider the corresponding occasion as invalid during the corresponding cell DTX/DRX Off Duration/non-Active Time. For example, when the cell DTX/DRX is configured and activated and the serving cell is not in the cell DTX/DRX active duration, the UE may not transmit any configured UL grant (configured uplink grant) to a HARQ entity.

When the cell DTX/DRX configuration is instructed and the CG-PUSCH, SR, RACH, SRS, CSI-RS and/or measurement configuration overlaps with the cell DTX/DRX Off Duration/non-Active Time of the corresponding cell, the UE may override/suspend/skip/cancel/release/discard/ignore/not transmit the operations based on the CG-PUSCH, SR, RACH, SRS, CSI-RS and/or measurement configuration/consider the corresponding resource as invalid/consider the corresponding occasion as invalid during the cell DTX/DRX Off Duration/non-Active Time of the corresponding cell. The UE may give priority to the cell DTX/DRX Off Duration/non-Active Time of the corresponding cell. For example, when the cell DTX/DRX is configured and activated and the serving cell is not in the cell DTX/DRX active duration, the UE may not transmit any configured UL grant (configured uplink grant) to the HARQ entity. As another example, when the cell DTX/DRX is configured and activated and the serving cell is not in the cell DTX/DRX active duration, the UE may not instruct the physical layer to signal the SR on the PUCCH resource for the corresponding SR. As another example, when the cell DTX/DRX is configured and activated and the serving cell is not in the cell DTX/DRX active duration, the scheduling request prohibit timer (sr-ProhibitTimer) may not be started. As another example, when the cell DTX/DRX is configured and activated and the serving cell is not in the cell DTX/DRX active duration, the scheduling request counter (SR_COUNTER) may not be increased.

For another example, when the cell DTX/DRX is configured (e.g., when the cell DTX/DRX mode 2/3/4 is configured), the UE may stop/skip/not perform the PDCCH monitoring. The UE may transmit the CG-PUSCH, SR, RACH, and/or SRS. When the DTX/DRX configuration is instructed, the UE may give priority to the operations based on the CG-PUSCH, SR, RACH, SRS, CSI-RS and/or measurement configuration when the CG-PUSCH, SR, RACH, SRS, CSI-RS and/or measurement configuration overlaps with the DTX/DRX Off Duration/non-Active Time of the corresponding cell. The DTX/DRX Off Duration/non-Active Time of the corresponding cell may be overridden/ignored on the operation occasion depending on the corresponding CG-PUSCH, SR, RACH, CSI-RS and/or measurement configuration. For example, when the cell DTX/DRX is configured and activated and the serving cell is not in the cell DTX/DRX active duration, the UE may transmit any configured UL grant (configured uplink grant) to the HARQ entity. As another example, when the cell DTX/DRX is configured and activated and the serving cell is not in the cell DTX/DRX active duration, the UE may instruct the physical layer to signal the SR on the PUCCH resource for the corresponding scheduling request (SR). As another example, when the cell DTX/DRX is configured and activated and the serving cell is not in the cell DTX/DRX active duration, a scheduling request prohibit timer (sr-ProhibitTimer) may be started. As another example, when the cell DTX/DRX is configured and activated and the serving cell is not in the cell DTX/DRX active duration, the scheduling request counter (SR_COUNTER) may be increased.

For another example, the cell DTX/DRX configuration may include at least one of: i) information for instructing a physical channel (e.g., PDCCH, dynamic grant (DG) PDSCH, CG PDSCH, PBCH, PUCCH, DG PUSCH, CG PUSCH, PRACH), a transmission channel (e.g., BCH, DL-SCH, PCH, UL-SCH, RACH), a logical channel (e.g., BCCH, PCCH, CCCH, DCCH, DTCH), and/or a signal (e.g., Synchronization Signal Block (SSB), DMRS, SRS, Phase-Tracking Reference Signal (PT-RS), etc.), ii) information for allowed/possible/available/supported transmission and/or reception during the corresponding cell DTX/DRX Off Duration/non-Active Time and iii) configuration information for the corresponding channel and/or signal.

For another example, the cell DTX/DRX configuration may include at least one of: i) information for instructing a physical channel (e.g., PDCCH, DG PDSCH, CG PDSCH, PBCH, PUCCH, DG PUSCH, CG PUSCH, PRACH), a logical channel (e.g., BCCH, PCCH, CCCH, DCCH, DTCH), and/or a signal (e.g., SSB, DMRS, SRS, PT-RS, etc.); ii) information for restricted/prohibited/unavailable/unsupported transmission and/or reception during the corresponding cell DTX/DRX Off Duration/non-Active Time; and iii) configuration information for the corresponding channel and/or signal.

For another example, the cell DTX/DRX configuration may include at least one of: i) information for instructing a physical channel(e.g., PDCCH, DG PDSCH, CG PDSCH, PBCH, PUCCH, DG PUSCH, CG PUSCH, PRACH), a logical channel(e.g., BCCH, PCCH, CCCH, DCCH, DTCH), and/or a signal(e.g., SSB, DMRS, SRS, PT-RS, etc.); ii) information for allowed/possible/available/supported transmission/reception during the corresponding cell DTX/DRX On Duration/Active Time; and iii) configuration information for the corresponding channel and/or signal.

For another example, only one cell DTX/DRX mode may be defined and used. The network may enable the UE supporting the functions to operate according to the corresponding functions without explicitly instructing the UE of the corresponding cell DTX/DRX mode.

Hereinafter, the DRX operation of the UE considering the cell DTX/DRX Off Duration/non-Active Time and/or the cell DTX/DRX On Duration/Active Time will be described in detail.

For the convenience of description, an operating method in which cell DTX is used in combination with the UE DRX will be described below. This is merely for the convenience of description, and it is obvious that operating methods in which cell DRX or cell DTX/cell DRX is used together with UE DRX also fall into the scope of the disclosure.

Typically, when the DRX (UE DRX) is configured (for all activated serving cells) while the UE (MAC entity) is in the RRC connected state, the UE (MAC entity) may use a DRX operation to discontinuously monitor the PDCCH. Otherwise, the UE (MAC entity) needs to monitor the PDCCH continuously (or as specified in 3GPP TS 38.213).

If the cell DTX is configured/instructed, the UE may consider the cell DTX and the UE DRX to (discontinuously) monitor the PDCCH. For example, the UE may (discontinuously) monitor the PDCCH by giving priority to the cell DTX/DRX operation of the corresponding cell over the UE DRX operation. As another example, the UE may (discontinuously) monitor the PDCCH by giving the priority to the UE DRX operation over the cell DTX/DRX operation of the corresponding cell.

For example, during the DTX Off Duration/non-Active Time of the corresponding cell, the PDCCH monitoring may be skipped/not performed/stopped/suspended. For example, if the UE DRX is configured for the UE when the cell DTX Off Duration/non-Active Time starts, the UE may skip/not perform/stop/suspend/ignore the Active Time operation regardless of the Active Time based on the UE DRX configuration. The UE may skip/not perform/stop/suspend the PDCCH monitoring on the serving cell. As another example, when the UE DRX is configured for the UE, the UE may perform the Active Time operation regardless of the active duration based on the cell DTX configuration during the DRX Active Time of the UE. The UE may perform the PDCCH monitoring on the corresponding serving cell. For reference, according to the 3GPP TS 38.321 MAC protocol specification, the Active Time operation based on the UE DRX configuration indicates the PDCCH monitoring for the serving cells in the corresponding DRX group.

For another example, the PDCCH may be monitored using a DRX operation during the DTX On Duration/Active Time of the corresponding cell. For example, if the UE DRX is configured for the UE when the cell DTX On Duration/Active Time starts, the PDCCH may be monitored regardless of the Active Time based on the UE DRX configuration. As another example, if the UE DRX is configured for the UE, the UE may skip/not perform/stop/suspend the PDCCH monitoring in the serving cell regardless of the active duration based on the cell DTX configuration during DRX inactive time of the UE.

As another example, when the UE DRX is configured for the UE, the UE may skip/not perform/stop/suspend the PDCCH monitoring in the serving cell regardless of the active duration based on the cell DTX configuration during the DRX inactive time of the UE.

For another example, a timer may be instructed/configured in the UE to instruct the cell DTX Off Duration/non-Active Time at the start of one cell DTX cycle/period in the corresponding cell. For the convenience of description, this is referred to as 'cellDTX-offDurationTimer)'. This is merely for the convenience of description and may be replaced by any other names. The information for indicating a delay before the start of the corresponding cellDTX-offDurationTimer may be instructed/configured in the UE. For the convenience of description, this will be referred to as 'cellDTX-offDurationSlotOffset'. The information for instructing a subframe in which the corresponding cell DTX cycle/period (or the related cell DTX Off Duration/non-Active Time) starts may be instructed/configured in the UE. For the convenience of description, this will be referred to as 'cellDTX-offDurationStartOffset)'.

If the cell DTX cycle/period is used for one cell DTX configuration and [(SFN × 10) + subframe number] modulo (cell DTX cycle/period) = (cellDTX-offDurationStartOffset) modulo (cell DTX cycle/period), the UE (MAC entity) starts/restarts the cellDTX-Off DurationTimer for the corresponding cell DTX configuration after the cellDTX-offDurationSlotOffset from the start of that subframe.

For another example, the base station may inactivate the cell DTX through any L1/L2/L3 signaling (e.g., UE-specific PDCCH, group-common PDCCH, cell-specific PDCCH, MAC CE, RRC). When the corresponding L1/L2/L3 signaling is received, the UE (MAC entity) may enter the cellDTX Off Duration/non-Active Time. The cellDTX-Off DurationTimer for the corresponding cell DTX configuration is started/restarted. The corresponding L1 signaling may be instructed with the UE-specific DCI/DCI_format, or the group-specific or cell-specific DCI/DCI_format. The corresponding MAC CE may be instructed having DCI scrambled with the UE-specific RNTI (e.g., C-RNTI). The corresponding MAC CE may be instructed having the DCI scrambled with the group-specific RNTI or the cell-specific RNTI. The corresponding L1/L2/L3 signaling may include at least one among i) index information for distinguishing the DTX configuration, ii) information for instructing the activity/inactivity, and iii) index information for identifying the cell to which the activity/inactivity is applies.

For another example, a timer for instructing the cell DTX On Duration/Active Time at the start of one cell DTX cycle/period in the corresponding cell may be instructed/configured to the UE. For the convenience of description, this will be referred to as 'cellDTX-onDurationTimer.' This is merely for the convenience of description and may be replaced by any other names. The information for instructing a delay before the start of the corresponding cellDTX-On DurationTimer may be instructed/configured to the UE. For the convenience of description, this will be referred to as 'cellDTX-onDurationSlotOffset.' The information for instructing the subframe in which the corresponding cell DTX cycle/period (or the related cell DTX On Duration/Active Time) starts may be instructed/configured to the UE. For the convenience of description, this will be referred to as 'cellDTX-onDurationStartOffset).'

If the cell DTX cycle/period is used for one cell DTX configuration, and [(SFN × 10) + subframe number] modulo (cell DTX cycle/period) = (cellDTX-On Duration startoffset) modulo (cell DTX cycle/period), the UE (MAC entity) starts/restarts the cellDTX-On DurationTimer for the corresponding cell DTX configuration after the cellDTXOn Duration slot offset from the start of that subframe.

For still another example, if the cell DTX cycle/period is used for one cell DTX configuration, and [(SFN × 10) + subframe number] modulo (cell DTX cycle/period) = (cellDTXOn Durationstartoffset), the UE (MAC entity) starts/restarts the cellDTX-On DurationTimer for the corresponding cell DTX configuration after the cell DTX On Duration slot offset from the start of that subframe. The UE may monitor the PDCCH when entering the cell DTX active period upon the start/restart of the cellDTX-On DurationTimer.

For another example, the base station may activate the cell DTX through any L1/L2/L3 signaling (e.g., UE-specific PDCCH, group-common PDCCH, cell-specific PDCCH, MAC CE, RRC). For example, when the corresponding L1/L2 signaling is received, the UE (MAC entity) may enter the cell DTX On Duration/Active Time. The cellDTX-Off DurationTimer for the corresponding cell DTX configuration is stopped. As another example, if the cell DTX cycle/period is used for one cell DTX configuration, and [(SFN × 10) + subframe number] modulo (cell DTX cycle/period) = (cellDTX-On Duration startoffset), the UE (MAC entity) starts/restarts the cellDTX-On DurationTimer for the corresponding cell DTX configuration after the cellDTX-On Duration slot offset from the start of that subframe. The UE may monitor the PDCCH when entering the cell DTX active period upon the start/restart of the cellDTX-On DurationTimer.

For another example, if the cell DTX and the UE DRX are configured/instructed to the UE and the cellDTX-Off DurationTimer is running, the UE may skip/not perform/stop/suspend the PDCCH monitoring (in the corresponding cell or the corresponding serving cell) even though the DRX-onDurationTimer/DRX-InactrivityTimer based on the corresponding UE DRX configuration is running. The UE may monitor the PDCCH in the remaining serving cells other than the corresponding cell.

For another example, if the cell DTX and the UE DRX are configured/instructed to the UE and the cellDTX-Off DurationTimer is running, the UE may not include the corresponding time in the Active Time (in the corresponding cell or the corresponding serving cell) even though the DRX-onDurationTimer/DRX-InactivityTimer based on the corresponding UE DRX configuration is running. It may be included in the Active Time in the remaining serving cells other than the corresponding cell.

For another example, if the cell DTX and the UE DRX are configured/instructed to the UE and the cellDTX-Off DurationTimer is not running, the UE may not include the corresponding time in the Active Time when the DRX-onDurationTimer/DRX-InactivityTimer based on the corresponding UE DRX configuration is running.

For another example, if the cell DTX and the UE DRX are configured/instructed to the UE and the cellDTX-Off DurationTimer is running, the UE may stop the corresponding DRX-onDurationTimer/DRX-InactivityTimer (in the corresponding cell or the corresponding serving cell) when the DRX-onDurationTimer/DRX-InactivityTimer based on the corresponding UE DRX configuration is running. The corresponding DRX-onDurationTimer/DRX-InactivityTimer may be maintained in the remaining serving cells other than the corresponding cell.

For another example, if the cell DTX and the UE DRX are configured/instructed to the UE and the cellDTX-Off DurationTimer starts/restarts, the UE may stop/suspend/suspend the corresponding DRX-onDurationTimer/DRX-InactivityTimer (in the corresponding cell or in the corresponding serving cell) when DRX-onDurationTimer/DRX-InactivityTimer based on the corresponding UE DRX configuration is running. The corresponding DRX-onDurationTimer/DRX-InactivityTimer may be maintained in the remaining serving cells other than the corresponding cell.

For another example, if the cell DTX and the UE DRX are configured/instructed to the UE and the cellDTX-Off DurationTimer stops/expires, the UE may start/restart/resume DRX-onDurationTimer/DRX-InactivityTimer based on the corresponding UE DRX configuration (in the corresponding cell or in the corresponding serving cell).

For another example, if the cell DTX and the UE DRX are configured/instructed to the UE and the cellDTX-Off DurationTimer is running, the UE may skip/not perform/stop/suspend the PDCCH monitoring even though DRX-RetransmissionTimerDL/DRX-RetransmissionTimerUL/DRX-RetransmissionTimerSL is running based on the corresponding UE DRX configuration (in the corresponding cell or in the corresponding serving cell). The PDCCH may be monitored in the remaining serving cells other than the corresponding cell.

For another example, if the cell DTX and the UE DRX are configured/instructed to the UE and the cellDTX-Off DurationTimer is running, the UE may not include the corresponding time in the Active Time even though DRX-RetransmissionTimerDL/DRX-RetransmissionTimerUL/DRX-RetransmissionTimerSL is running based on the corresponding UE DRX configuration (in the corresponding cell or in the corresponding serving cell). It may be included in the Active Time in the remaining serving cells other than the corresponding cell.

For another example, if the cell DTX and the UE DRX are configured/instructed to the UE and the cellDTX-Off DurationTimer is not running, the UE may include the corresponding time in the Active Time when DRX-RetransmissionTimerDL/DRX-RetransmissionTimerUL/DRX-RetransmissionTimerSL is running based on the corresponding UE DRX configuration.

For another example, if the cell DTX and the UE DRX are configured/instructed to the UE and the cellDTX-Off DurationTimer is running, the UE may stop the corresponding DRX-RetransmissionTimerDL/DRX-RetransmissionTimerUL/DRX-RetransmissionTimerSL when DRX-RetransmissionTimerDL/DRX-RetransmissionTimerUL/DRX-RetransmissionTimerSL is running based on the corresponding UE DRX configuration (in the corresponding cell or in the corresponding serving cell). The corresponding DRX-RetransmissionTimerDL/DRX-RetransmissionTimerUL/DRX-RetransmissionTimerSL may be maintained in the remaining serving cells other than the corresponding cell.

For another example, if the cell DTX and the UE DRX are configured/instructed to the UE and the cellDTX-Off DurationTimer starts/restarts, the UE may stop/suspend/suspend the corresponding DRX-RetransmissionTimerDL/DRX-RetransmissionTimerUL/DRX-RetransmissionTimerSL when DRX-RetransmissionTimerDL/DRX-RetransmissionTimerUL/DRX-RetransmissionTimerSL is running based on the corresponding UE DRX configuration (in the corresponding cell or in the corresponding serving cell). The corresponding DRX-RetransmissionTimerDL/DRX-RetransmissionTimerUL/DRX-RetransmissionTimerSL may be maintained in the remaining serving cells other than the corresponding cell.

For another example, if the cell DTX and the UE DRX are configured/instructed to the UE and the cellDTX-Off DurationTimer stops/expires, the UE may start/restart/resume DRX-RetransmissionTimerDL/DRX-RetransmissionTimerUL/DRX-RetransmissionTimerSL based on the corresponding UE DRX configuration (in the corresponding cell or in the corresponding serving cell).

For another example, if the cell DTX and the UE DRX are configured/instructed to the UE and the cellDTX-Off DurationTimer is running, the UE may skip/not perform/stop/suspend the PDCCH monitoring even though random(ra-)ContentionResolutionTimer/message(msg)B-ResponseWindow is running (in the corresponding cell or in the corresponding serving cell). The PDCCH may be monitored in the remaining serving cells other than the corresponding cell.

For another example, if the cell DTX and the UE DRX are configured/instructed to the UE and the cellDTX-Off DurationTimer is running, the UE may not include the corresponding time in the Active Time even though random(ra-)ContentionResolutionTimer/message(msg)B-ResponseWindow is running (in the corresponding cell or in the corresponding serving cell). It may be included in the Active Time in the remaining serving cells other than the corresponding cell.

For another example, if the cell DTX and the UE DRX are configured/instructed to the UE and the cellDTX-Off DurationTimer is not running, the UE may include the corresponding time in the Active Time when the corresponding random(ra-)ContentionResolutionTimer/message(msg)B-ResponseWindow is running.

For another example, if the cell DTX and the UE DRX are configured/instructed to the UE and the cellDTX-Off DurationTimer is running, the UE may include the corresponding time in the Active Time when the corresponding random(ra-)ContentionResolutionTimer/message(msg)B-ResponseWindow is running. The UE may monitor the PDCCH in the serving cell.

For another example, if the cell DTX and the UE DRX are configured/instructed to the UE and the cellDTX-Off DurationTimer is running, the UE may perform at least one of operations such as stopping/interrupting/suspending the corresponding random(ra-)ContentionResolutionTimer/message(msg)B-ResponseWindow, skipping/not performing/stopping/interrupting/suspending the PDCCH monitoring, discarding/maintaining a temporary UE identifier (TEMPORARY_C-RNTI), i.e., a value received in a random access response message, and considering a random access procedure as failed/stopped/suspended/interrupted when the random(ra-)ContentionResolutionTimer/message(msg)B-ResponseWindow is running (in the corresponding cell or in the corresponding serving cell). The UE may not operate as above in the remaining serving cells other than the corresponding cell.

For another example, if the cell DTX and the UE DRX are configured/instructed to the UE and the cellDTX-Off DurationTimer starts/restarts, the UE may perform at least one of operations such as stopping/interrupting/suspending the corresponding random(ra-)ContentionResolutionTimer/message(msg)B-ResponseWindow, skipping/not performing/stopping/interrupting/suspending the PDCCH monitoring, discarding/maintaining a temporary UE identifier (TEMPORARY _C-RNTI), i.e., a value received in a random access response message, and considering a random access procedure as failed when the random(ra-)ContentionResolutionTimer/message(msg)B-ResponseWindow based on the corresponding UE DRX configuration is running (in the corresponding cell or in the corresponding serving cell). The UE may not operate as described above in the remaining serving cells other than the corresponding cell.

For another example, if the cell DTX and the UE DRX are configured/instructed to the UE and the cellDTX-Off DurationTimer stops/expires, the UE may start/restart/resume the random(ra-)ContentionResolutionTimer/message(msg)B-ResponseWindow based on the corresponding UE DRX configuration (in the corresponding cell or in the corresponding serving cell).

For another example, if the cell DTX and the UE DRX are configured/instructed to the UE and the cellDTX-Off DurationTimer is running, the UE may skip/not perform/stop/suspend the PDCCH monitoring when a scheduling request is sent on the PUCCH and is pending (in the corresponding cell or in the corresponding serving cell). The PDCCH may be monitored in the remaining serving cells other than the corresponding cell.

For another example, if the cell DTX and the UE DRX are configured/instructed to the UE and the cellDTX-Off DurationTimer is running, the UE may not include the corresponding time in the Active Time when a scheduling request is sent on the PUCCH and is pending (in the corresponding cell or in the corresponding serving cell). It may be included in the Active Time in the remaining serving cells other than the corresponding cell.

For another example, if the cell DTX and the UE DRX are configured/instructed to the UE and the cellDTX-Off DurationTimer is not running, the UE may include the corresponding time in the Active Time when a scheduling request is sent on the PUCCH and is pending (in the corresponding cell or in the corresponding serving cell). It may not be included in the Active Time in the remaining serving cells other than the corresponding cell.

For another example, if the cell DTX and the UE DRX are configured/instructed to the UE and the cellDTX-Off DurationTimer is running, the UE may include the corresponding time in the Active Time when a scheduling request is sent on the PUCCH and is pending (in the corresponding cell or in the corresponding serving cell). The UE may monitor the PDCCH in the serving cell.

For another example, if the cell DTX and the UE DRX are configured/instructed to the UE and the cellDTX-Off DurationTimer is running, the UE may perform at least one among operations such as skipping/not performing/stopping/interrupting/suspending the PDCCH monitoring, initiating the random access procedure in a special cell (SpCell), stopping/interrupting/suspending the pending scheduling request, cancelling the pending scheduling request, starting a scheduling request prohibit timer(sr-ProhibitTimer), increasing a scheduling request counter (SR_COUNTER) by '1,' and stopping a random access procedure in progress due to the pending SR (for at least one of a buffer status report (BSR), a sidelink-BSR (SL-BSR), a beam failure recovery (BFR), and consistent listen before talk (LBT) failure recovery) when a scheduling request is sent on the PUCCH and is pending (in the corresponding cell or in the corresponding serving cell). The UE may not operate as described above in the remaining serving cells other than the corresponding cell.

For another example, if the cell DTX and the UE DRX are configured/instructed to the UE and the cellDTX-Off DurationTimer starts/restarts, the UE may perform at least one of operations, such as i) skipping/not performing/stopping/interrupting/suspending the PDCCH monitoring, ii) initiating the random access procedure (in the SpCell), iii) stopping/interrupting/suspending the pending scheduling request, iv) canceling the pending scheduling request, starting the scheduling request prohibit timer (sr-ProhibitTimer), v) increasing the scheduling request counter (SR_COUNTER) by '1,' and vi) stopping the random access procedure in progress due to the pending SR (for BSR, SL-BSR, BFR, consistent LBT failure recovery) when a scheduling request is sent on the PUCCH and is pending (in the corresponding cell or in the corresponding serving cell). The UE may not operate as described above in the remaining serving cells other than the corresponding cell.

For another example, if the cell DTX and the UE DRX are configured/instructed to the UE and the cellDTX-Off DurationTimer stops/expires, the UE may perform at least one of operations, such as i) starting/restarting/resuming the pending scheduling request, starting the scheduling request prohibit timer (sr-ProhibitTimer) and ii) increasing the scheduling request counter (SR_COUNTER) by '1' based on the corresponding UE DRX configuration (in the corresponding cell or in the corresponding serving cell). The UE may not operate as described above in the remaining serving cells other than the corresponding cell.

For another example, if the cell DTX and the UE DRX are configured/instructed to the UE and the cellDTX-Off DurationTimer is running, the UE (MAC entity) may skip/not perform/stop/suspend the PDCCH monitoring when the PDCCH instructing a new transmission addressed to the C-RNTI of the corresponding MAC entity is not received after successful reception of an unselected random access preamble among the contention based random access preambles by the MAC entity (in the corresponding cell or in the corresponding serving cell). The PDCCH may be monitored in the remaining serving cells other than the corresponding cell.

For another example, if the cell DTX and the UE DRX are configured/instructed to the UE and the cellDTX-Off DurationTimer is running, the UE (MAC entity) may not include the corresponding time in the Active Time even when the PDCCH instructing a new transmission addressed to the C-RNTI of the corresponding MAC entity is not received after successful reception of an unselected random access preamble among the contention based random access preambles by the MAC entity (in the corresponding cell or in the corresponding serving cell). It may be included in the Active Time in the remaining serving cells other than the corresponding cell.

For another example, if the cell DTX and the UE DRX are configured/instructed to the UE and the cellDTX-Off DurationTimer is not running, the UE (MAC entity) may include the corresponding time in the Active Time when the PDCCH instructing a new transmission addressed to the C-RNTI of the corresponding MAC entity is not received after successful reception of an unselected random access preamble among the contention based random access preambles by the MAC entity (in the corresponding cell or in the corresponding serving cell).

For another example, if the cell DTX and the UE DRX are configured/instructed to the UE and the cellDTX-Off DurationTimer is running, the UE (MAC entity) may include the corresponding time in the Active Time when the PDCCH instructing a new transmission addressed to the C-RNTI of the corresponding MAC entity is not received after successful reception of an unselected random access preamble among the contention based random access preambles by the MAC entity (in the corresponding cell or in the corresponding serving cell). The UE may monitor the PDCCH in the serving cell.

For another example, if the cell DTX and the UE DRX are configured/instructed to the UE and the cellDTX-Off DurationTimer starts/restarts, the UE (MAC entity) may skip/not perform/stop/suspend the PDCCH monitoring when the PDCCH instructing a new transmission addressed to the C-RNTI of the corresponding MAC entity has not been received after successful reception of an unselected random access preamble among the contention based random access preambles by the MAC entity (in the corresponding cell or in the corresponding serving cell). The PDCCH may be monitored in the remaining serving cells other than the corresponding cell.

The following describes how any parameter(e.g., DRX timer, random access contention resolution timer, etc.) described in relation to the corresponding cell or the corresponding serving cell is associated with and operates based on the corresponding cell or the corresponding serving cell.

For example, if the cell DTX and the UE DRX are configured/instructed to the UE and the cellDTX-On DurationTimer is not running, the UE may skip/not perform/stop/suspend the PDCCH monitoring when the DRX-onDurationTimer/DRX-InactivityTimer based on the corresponding UE DRX configuration is running (in the corresponding cell or in the corresponding serving cell). If the cellDTX-On DurationTimer is running, the UE may monitor the PDCCH when the DRX-onDurationTimer/DRX-InactivityTimer based on the corresponding UE DRX configuration is running (in the corresponding cell or in the corresponding serving cell).

For another example, if the cell DTX and the UE DRX are configured/instructed to the UE and the cellDTX-On DurationTimer is not running, the UE may include the corresponding time in the Active Time when the DRX-onDurationTimer/DRX-InactivityTimer based on the corresponding UE DRX configuration is running (in the corresponding cell or in the corresponding serving cell). The UE may monitor the PDCCH of the serving cell.

For another example, if the cell DTX and the UE DRX are configured/instructed to the UE and the cellDTX-On DurationTimer is not running, the UE may not include the corresponding time in the Active Time when the DRX-onDurationTimer/DRX-InactivityTimer based on the corresponding UE DRX configuration is running (in the corresponding cell or in the corresponding serving cell). It may be included in the Active Time in the remaining serving cells other than the corresponding cell.

For another example, the DRX-onDurationTimer/DRX-InactivityTimer is applied per configuration, group, or UE (configuration/group/UE-specifically applied) in one DRX configuration/DRX group. Therefore, regardless of whether the cellDTX-OnDurationTimer is running, the UE may include the corresponding time in the Active Time (in the cell or in the serving cell) when the DRX-onDurationTimer/DRX-InactivityTimer based on the corresponding UE DRX configuration is running (in the corresponding cell or in the corresponding serving cell). The UE may monitor the PDCCH in the corresponding serving cell. When the DRX-onDurationTimer/DRX-InactivityTimer is not running (in the corresponding cell or in the corresponding serving cell), the PDCCH monitoring may be skipped/not performed/stopped/suspended.

For another example, if the cell DTX and the UE DRX are configured/instructed to the UE and the cellDTX-On DurationTimer is running, the UE may include the corresponding time in the Active Time when the DRX-onDurationTimer/DRX-InactivityTimer based on the corresponding UE DRX configuration is running (in the corresponding cell or in the corresponding serving cell). The UE may monitor the PDCCH of the serving cell.

For another example, if the cell DTX and the UE DRX are configured/instructed to the UE and the cellDTX-On DurationTimer is not running, the UE may stop the corresponding DRX-onDurationTimer/DRX-InactivityTimer when the DRX-onDurationTimer/DRX-InactivityTimer based on the corresponding UE DRX configuration is running, (in the corresponding cell or in the corresponding serving cell). In the remaining serving cells other than the corresponding cell, (if the cellDTX-On DurationTimer of the serving cell is running), the corresponding DRX-onDurationTimer/DRX-InactivityTimer may be maintained.

For another example, if the cell DTX and the UE DRX are configured/instructed to the UE and the cellDTX-On DurationTimer starts/restarts, the UE may start/restart/resume the corresponding DRX-onDurationTimer/DRX-InactivityTimer (in the corresponding cell or in the corresponding serving cell) when the DRX-onDurationTimer/DRX-InactivityTimer based on the corresponding UE DRX configuration is not running.

For another example, if the cell DTX and the UE DRX are configured/instructed to the UE and the cellDTX-On DurationTimer starts/restarts, the UE may start/restart/resume/maintain the corresponding DRX-onDurationTimer/DRX-InactivityTimer (in the corresponding cell or in the corresponding serving cell) when the DRX-onDurationTimer/DRX-InactivityTimer based on the corresponding UE DRX configuration is running. The corresponding DRX-onDurationTimer/DRX-InactivityTimer may be maintained in the remaining serving cells other than the corresponding cell.

For another example, if the cell DTX and the UE DRX are configured/instructed to the UE and the cellDTX-On DurationTimer stops/expires, the UE may stop/suspend/suspend the DRX-onDurationTimer/DRX-InactivityTimer based on the corresponding UE DRX configuration (in the corresponding cell or in the corresponding serving cell). The corresponding DRX-onDurationTimer/DRX-InactivityTimer may be maintained in the remaining serving cells other than the corresponding cell.

For another example, if the cell DTX and the UE DRX are configured/instructed to the UE and the cellDTX-On DurationTimer is not running, the UE may skip/not perform/stop/suspend the PDCCH monitoring even when the DRX-RetransmissionTimerDL/DRX-RetransmissionTimerUL/DRX-RetransmissionTimerSL is running based on the corresponding UE DRX configuration (in the corresponding cell or in the corresponding serving cell). The PDCCH may be monitored in the remaining serving cells other than the corresponding cell.

For another example, if the cell DTX and the UE DRX are configured/instructed to the UE and the cellDTX-On DurationTimer is not running, the UE may not include the corresponding time in the Active Time even when the DRX-RetransmissionTimerDL/DRX-RetransmissionTimerUL/DRX-RetransmissionTimerSL is running based on the corresponding UE DRX configuration (in the corresponding cell or in the corresponding serving cell). It may be included in the Active Time in the remaining serving cells other than the corresponding cell.

For another example, if the cell DTX and the UE DRX are configured/instructed to the UE and the cellDTX-On DurationTimer is running, the UE may include the corresponding time in the Active Time when DRX-RetransmissionTimerDL/DRX-RetransmissionTimerUL/DRX-RetransmissionTimerSL is running based on the corresponding UE DRX configuration. The UE may monitor the PDCCH in the corresponding serving cell.

For another example, if the cell DTX and the UE DRX are configured/instructed to the UE and the cellDTX-On DurationTimer is not running, the UE may include the corresponding time in the Active Time when DRX-RetransmissionTimerDL/DRX-RetransmissionTimerUL/DRX-RetransmissionTimerSL is running based on the corresponding UE DRX configuration. The UE may monitor the PDCCH in the corresponding serving cell.

For another example, if the cell DTX and the UE DRX are configured/instructed to the UE and the cellDTX-On DurationTimer is not running, the UE may stop/suspend/suspend the corresponding DRX-RetransmissionTimerDL/DRX-RetransmissionTimerUL/DRX-RetransmissionTimerSL when the DRX-RetransmissionTimerDL/DRX-RetransmissionTimerUL/DRX-RetransmissionTimerSL is running based on the corresponding UE DRX configuration (in the corresponding cell or in the corresponding serving cell). In the remaining serving cells other than the corresponding cell, the corresponding DRX-RetransmissionTimerDL/DRX-RetransmissionTimerUL/DRX-RetransmissionTimerSL may be maintained.

For another example, if the cell DTX and the UE DRX are configured/instructed to the UE and the cellDTX-On DurationTimer stops/is interrupted/is suspended/expires, the UE may stop/suspend/suspend the corresponding DRX-RetransmissionTimerDL/DRX-RetransmissionTimerUL/DRX-RetransmissionTimerSL when the DRX-RetransmissionTimerDL/DRX-RetransmissionTimerUL/DRX-RetransmissionTimerSL is running based on the corresponding UE DRX configuration (in the corresponding cell or in the corresponding serving cell). In the remaining serving cells other than the corresponding cell, the corresponding DRX-RetransmissionTimerDL/DRX-RetransmissionTimerUL/DRX-RetransmissionTimerSL may be maintained.

For another example, if the cell DTX and the UE DRX are configured/instructed to the UE and the cellDTX-On DurationTimer is started/restarted/resumed, the UE may start/restart/resume the DRX-RetransmissionTimerDL/DRX-RetransmissionTimerUL/DRX-RetransmissionTimerSL based on the corresponding UE DRX configuration (in the corresponding cell or in the corresponding serving cell). In the remaining serving cells other than the corresponding cell, the corresponding DRX-RetransmissionTimerDL/DRX-RetransmissionTimerUL/DRX-RetransmissionTimerSL may be maintained.

For another example, if the cell DTX and the UE DRX are configured/instructed to the UE and the cellDTX-On DurationTimer is not running, the UE may skip/not perform/stop/suspend the PDCCH monitoring even when the random(ra-)ContentionResolutionTimer/message(msg)B-ResponseWindow is running (in the corresponding cell or in the corresponding serving cell). The PDCCH may be monitored in the remaining serving cells other than the corresponding cell.

For another example, if the cell DTX and the UE DRX are configured/instructed to the UE and the cellDTX-On DurationTimer is not running, the UE may not include the corresponding time in the Active Time even when the random(ra-)ContentionResolutionTimer/message(msg)B-ResponseWindow is running (in the corresponding cell or in the corresponding serving cell). It may be included in the Active Time in the remaining serving cells other than the corresponding cell.

For another example, if the cell DTX and the UE DRX are configured/instructed to the UE and the cellDTX-On DurationTimer is running, the UE may include the corresponding time in the Active Time when the corresponding random(ra-)ContentionResolutionTimer/message(msg)B-ResponseWindow is running. The UE may monitor the PDCCH in the corresponding serving cell.

For another example, if the cell DTX and the UE DRX are configured/instructed to the UE and the cellDTX-On DurationTimer is not running, the UE may include the corresponding time in the Active Time when the corresponding random(ra-)ContentionResolutionTimer/message(msg)B-ResponseWindow is running. The UE may monitor the PDCCH in the corresponding serving cell.

For another example, if the cell DTX and the UE DRX are configured/instructed to the UE and the cellDTX-On DurationTimer is not running, the UE may perform at least one of operations, such as stopping/interrupting/suspending the corresponding random(ra-)ContentionResolutionTimer/message(msg)B-ResponseWindow, skipping/not performing/stopping/interrupting/suspending the PDCCH monitoring, discarding/maintaining a temporary UE identifier (TEMPORARY_C-RNTI), i.e., a value received in a random access response message, and considering the random access procedure as failed/stopped/interrupted/suspended when the random(ra-)ContentionResolutionTimer/message(msg)B-ResponseWindow is running (in the corresponding cell or in the corresponding serving cell). The UE may not operate as above in the remaining serving cells other than the corresponding cell.

For another example, if the cell DTX and the UE DRX are configured/instructed to the UE and the cellDTX-On DurationTimer is stopped/interrupted/suspended/expires, the UE may perform at least one of operations, such as stopping/interrupting/suspending the corresponding random(ra-)ContentionResolutionTimer/message(msg)B-ResponseWindow, skipping/not performing/stopping/interrupting/suspending the PDCCH monitoring, discarding/maintaining a temporary UE identifier (TEMPORARY_C-RNTI), i.e., a value received in a random access response message, and considering the random access procedure as failed/stopped/interrupted/suspended when the random(ra-)ContentionResolutionTimer/message(msg)B-ResponseWindow is running based on the corresponding UE DRX configuration (in the corresponding cell or in the corresponding serving cell). The UE may not operate as described above in the remaining serving cells other than the corresponding cell.

For another example, if the cell DTX and the UE DRX are configured/instructed to the UE and the cellDTX-On DurationTimer is started/restarted/resumed, the UE may start/restart/resume the random(ra-)ContentionResolutionTimer/message(msg)B-ResponseWindow based on the corresponding UE DRX configuration (in the corresponding cell or in the corresponding serving cell).

For another example, if the cell DTX and the UE DRX are configured/instructed to the UE and the cellDTX-On DurationTimer is not running, the UE may skip/not perform/stop/suspend the PDCCH monitoring when a scheduling request is sent on the PUCCH and is pending (in the corresponding cell or in the corresponding serving cell). The PDCCH may be monitored in the remaining serving cells other than the corresponding cell.

For another example, if the cell DTX and the UE DRX are configured/instructed to the UE and the cellDTX-On DurationTimer is not running, the UE may not include the corresponding time in the Active Time when a scheduling request is sent on the PUCCH and is pending (in the corresponding cell or in the corresponding serving cell). It may be included in the Active Time in the remaining serving cells other than the corresponding cell.

For another example, if the cell DTX and the UE DRX are configured/instructed to the UE and the cellDTX-On DurationTimer is running, the UE may include the corresponding time in the Active Time when a scheduling request is sent on the PUCCH and is pending (in the corresponding cell or in the corresponding serving cell). The UE may monitor the PDCCH in the corresponding serving cell.

For another example, if the cell DTX and the UE DRX are configured/instructed to the UE and the cellDTX-On DurationTimer is not running, the UE may include the corresponding time in the Active Time when a scheduling request is sent on the PUCCH and is pending (in the corresponding cell or in the corresponding serving cell) the Active Time. The UE may monitor the PDCCH in the corresponding serving cell.

For another example, if the cell DTX and the UE DRX are configured/instructed to the UE and the cellDTX-On DurationTimer is not running, the UE may perform at least one of operations, such as i) skipping/not performing/stopping/interrupting/suspending the PDCCH monitoring, ii) initiating the random access procedure (in the SpCell), stopping/interrupting/suspending the pending scheduling request, iii) canceling the pending scheduling request, starting the scheduling request prohibit timer (sr-ProhibitTimer), iv) increasing the scheduling request counter (SR_COUNTER) by '1,' and v) stopping the random access procedure in progress due to the pending SR (for one or more among BSR, SL-BSR, BFR, and consistent LBT failure recovery) when a scheduling request is sent on the PUCCH and is pending (in the corresponding cell or in the corresponding serving cell). The UE may not operate as described above in the remaining serving cells other than the corresponding cell.

For another example, if the cell DTX and the UE DRX are configured/instructed to the UE and the cellDTX-On DurationTimer is stopped/interrupted/suspended/expires, the UE may perform at least one of operations, such as i) skipping/not performing/stopping/interrupting/suspending the PDCCH monitoring, ii) initiating the random access procedure (in the SpCell), iii) stopping/interrupting/suspending the pending scheduling request, iv) canceling the pending scheduling request, v) starting the scheduling request prohibit timer (sr-ProhibitTimer), vi) increasing the scheduling request counter (SR_COUNTER) by '1,' vii) stopping the random access procedure in progress due to the pending SR (for one or more among BSR, SL-BSR, BFR, and viii) consistent LBT failure recovery) when a scheduling request is sent on the PUCCH and is pending (in the corresponding cell or in the corresponding serving cell). The UE may not operate as described above in the remaining serving cells other than the corresponding cell.

For another example, if the cell DTX and the UE DRX are configured/instructed to the UE and the cellDTX-On DurationTimer is started/restarted/resumed, the UE may perform at least one of operations, such as i) starting/restarting/resuming the pending scheduling request, ii) starting the scheduling request prohibit timer (sr-ProhibitTimer), and iii) increasing the scheduling request counter (SR_COUNTER) by '1,' based on the corresponding UE DRX configuration (in the corresponding cell or in the corresponding serving cell). The UE may not operate as described above in the remaining serving cells other than the corresponding cell.

For another example, if the cell DTX and the UE DRX are configured/instructed to the UE and the cellDTX-On DurationTimer is not running, the UE (MAC entity) may skip/not perform/stop/suspend the PDCCH monitoring when the PDCCH instructing a new transmission addressed to the C-RNTI of the corresponding MAC entity is not received after successful reception of an unselected random access preamble among the contention based random access preambles by the MAC entity (in the corresponding cell or in the corresponding serving cell). The PDCCH may be monitored in the remaining serving cells other than the corresponding cell.

For another example, if the cell DTX and the UE DRX are configured/instructed to the UE and the cellDTX-On DurationTimer is not running, the UE (MAC entity) may not include the corresponding time in the Active Time even when the PDCCH instructing a new transmission addressed to the C-RNTI of the corresponding MAC entity is not received after successful reception of an unselected random access preamble among the contention based random access preambles by the MAC entity (in the corresponding cell or in the corresponding serving cell). It may be included in the Active Time in the remaining serving cells other than the corresponding cell.

For another example, if the cell DTX and the UE DRX are configured/instructed to the UE and the cellDTX-On DurationTimer is running, the UE (MAC entity) may include the corresponding time in the Active Time when the PDCCH instructing a new transmission addressed to the C-RNTI of the corresponding MAC entity is not received after successful reception of an unselected random access preamble among the contention based random access preambles by the MAC entity (in the corresponding cell or in the corresponding serving cell). The UE may monitor the PDCCH in the corresponding serving cell.

For another example, if the cell DTX and the UE DRX are configured/instructed to the UE and the cellDTX-On DurationTimer is not running, the UE (MAC entity) may include the corresponding time in the Active Time when the PDCCH instructing a new transmission addressed to the C-RNTI of the corresponding MAC entity is not received after successful reception of an unselected random access preamble among contention based random access preambles by the MAC entity (in the corresponding cell or in the corresponding serving cell). The UE may monitor the PDCCH in the corresponding serving cell.

For another example, if the cell DTX and the UE DRX are configured/instructed to the UE and the cellDTX-On DurationTimer is stopped/interrupted/suspended/expires, the UE (MAC entity) may skip/not perform/stop/suspend the PDCCH monitoring when the PDCCH instructing a new transmission addressed to the C-RNTI of the corresponding MAC entity is not received after successful reception of an unselected random access preamble among the contention based random access preambles by the MAC entity (in the corresponding cell or in the corresponding serving cell). The PDCCH may be monitored in the remaining serving cells other than the corresponding cell.

For another example, if the cell DTX and the UE DRX are configured/instructed to the UE and the cellDTX-On DurationTimer is started/restarted/resumed, the UE (MAC entity) may monitor the PDCCH when the PDCCH instructing a new transmission addressed to the C-RNTI of the corresponding MAC entity is not received after successful reception of an unselected random access preamble among the contention based random access preambles by the MAC entity (in the corresponding cell or in the corresponding serving cell).

The following describes how any parameter (e.g., DRX timer, random access contention resolution timer, etc.) described in relation to the corresponding cell or the corresponding serving cell is associated with and operates based on the corresponding cell or the corresponding serving cell.

When the UE DRX is configured, a DRX-HARQ-RTT timer may be configured as timers for each of DL, UL, and sidelink (SL). The drx-HARQ-RTT-TimerDL refers to the minimum duration before one DL assignment for HARQ retransmission expected by the UE (MAC entity). The drx-HARQ-RTT-TimerUL refers to the minimum duration before one UL HARQ retransmission grant expected by the UE (MAC entity). In addition, the drx-HARQ-RTT-TimerSL refers to the minimum duration before one SL the HARQ retransmission grant expected by the UE (MAC entity).

For the cell DTX 'On Duration timer running/Active Time,' the drx-HARQ-RTT-TimerDL may be started at any of the following events: i) a MAC protocol data unit (PDU) is received within the DL assignment (configured downlink assignment) for unicast, ii) the PDCCH instructs the DL transmission, or iii) the PDCCH instructs the retransmission of the HARQ feedback.

For the cell DTX 'Off Duration timer running/non-Active Time,' the drx-HARQ-RTT-TimerDL may not receive (or may be set/configured not to receive) the MAC PDU within the configured DL assignment for unicast. Alternatively, the PDCCH may be set/configured to instruct DL transmission or not to instruct the retransmission of the HARQ feedback. Therefore, it does not affect the start operation of the drx-HARQ-RTT-TimerDL.

If the cell DTX 'Off Duration timer running/non-Active Time' may be set/configured to receive the MAC PDU within the configured DL assignment, the UE (MAC entity) may start the drx-HARQ-RTT-TimerDL for the corresponding HARQ process within the first symbol after the end of the corresponding transmission carrying the DL HARQ feedback.

For the cell DTX 'On Duration timer running/Active Time,' if the data of the corresponding HARQ process is not successfully decoded when the drx-HARQ-RTT-TimerDL expires, the drx-RetransmissionTimerDL for the corresponding HARQ process may be started.

For the cell DTX 'Off Duration timer running/non-Active Time,' even if the data of the corresponding HARQ process is not successfully decoded when the drx-HARQ-RTT-TimerDL expires, it is impossible to receive the corresponding data, and thus there is no need to monitor the corresponding PDCCH. Therefore, at least one of operations (to be described later) may be performed.

For example, in the case of the cell DTX 'Off Duration timer running/non-Active Time,' if the data of the corresponding HARQ process is not successfully decoded when the drx-HARQ-RTT-TimerDL expires, the drx-RetransmissionTimerDL for the corresponding HARQ process may be started when the next/subsequent cellDTX-On DurationTimer is started/restarted/resumed/executed. Alternatively, after the drx-HARQ-RTT-TimerDL expires, the drx-RetransmissionTimerDL for the corresponding HARQ process may be started after the corresponding cellDTX slot offset from the beginning of the subframe in which the next/subsequent cellDTX-On DurationTimer is started/restarted/resumed/executed.

For the cell DTX 'On Duration timer running/Active Time,' the drx-HARQ-RTT-TimerUL may be started at any of the following events: i) the MAC PDU is transmitted within the configured UL grant (and no LBT failure is received from lower layers); or ii) the PDCCH instructs UL transmission.

For the cell DTX 'Off Duration timer running/non-Active Time,' the drx-HARQ-RTT-TimerUL may be set/configured so that the MAC PDU cannot be transmitted within the configured UL grant. Alternatively, the drx-HARQ-RTT-TimerUL may be set/configured so that the PDCCH does not instruct the UL transmission. Therefore, it does not affect the drx-HARQ-RTT-TimerUL start operation.

If the MAC PDU is set/configured to be transmitted within the configured UL grant in the cell DTX 'Off Duration timer running/non-Active Time' (when no LBT failure is received from lower layers), the UE (MAC entity) may start the DRX-HARQ-RTT-TimerUL for the corresponding HARQ process within the first symbol after the end of the first transmission of the corresponding PUSCH transmission.

For the cell DTX 'On Duration timer running/Active Time,' when the drx-HARQ-RTT-TimerUL expires, the drx-RetransmissionTimerUL for the corresponding HARQ process may be started within the first symbol after the expiration of the corresponding drx-HARQ-RTT-TimerUL.

For the cell DTX 'Off Duration timer running/non-Active Time,' when the drx-HARQ-RTT-TimerUL expires, the corresponding data is not transmittable even after the corresponding drx-HARQ-RTT-TimerUL expires, and thus there is no need to monitor the corresponding PDCCH. Therefore, at least one of operations (to be described later) may be performed.

For example, in the case of the cell DTX 'Off Duration timer running/non-Active Time,' if the drx-HARQ-RTT-TimerUL expires, the drx-RetransmissionTimerUL for the corresponding HARQ process may be started when the next/subsequent cellDTX-On DurationTimer (celldtx-onDurationTimer) is started/restarted/resumed/run. Alternatively, when the drx-HARQ-RTT-TimerUL expires, the drx-RetransmissionTimerUL for the corresponding HARQ process may be started after the corresponding cellDTX-SlotOffset from the beginning of the subframe in which the next/subsequent cellDTX-On DurationTimer is started/restarted/resumed/run after the expiration of the corresponding drx-HARQ-RTT-TimerUL. Alternatively, when the drx-HARQ-RTT-TimerUL expires, the drx-RetransmissionTimerUL for the corresponding HARQ process may be started within the first symbol after the corresponding cellDTX-SlotOffset from the beginning of the subframe in which the next/subsequent cellDTX-On DurationTimer is started/restarted/resumed/run after the expiration of the corresponding drx-HARQ-RTT-TimerUL.

For the cell DTX 'On Duration timer running/Active Time,' the drx-HARQ-RTT-TimerSL may be started at any of the following events: i) the MAC PDU is transmitted within the configured SL grant; and ii) the PDCCH instructs sidelink transmission.

For the cell DTX 'Off Duration timer running/non-Active Time,' the drx-HARQ-RTT-TimerSL may be set/configured not top transmit the MAC PDU within the configured SL grant. Alternatively, the PDCCH may be set/configured not to instruct SL transmission. Therefore, it does not affect the drx-HARQ-RTT-TimerSL start operation.

If the MAC PDU is set/configured to be transmitted within the configured SL grant in the cell DTX 'Off Duration timer running/non-Active Time,' or if the MAC PDU is transmitted within the configured SL grant in the cell DTX 'Off Duration timer running/non-Active Time' because the SL data transmission/reception may be provided regardless of the cell DTX 'Off Duration timer running/non-Active Time,' the UE (MAC entity) may start the drx-HARQ-RTT-TimerSL for the corresponding HARQ process at the first symbol after the end of the corresponding PSSCH transmission. For example, when the PUCCH resource is not configured, the corresponding drx-HARQ-RTT-TimerSL may be started. For another example, when the PUCCH resource is configured, the drx-HARQ-RTT-TimerSL for the corresponding HARQ process may be started within the first symbol after the end of the corresponding PUCCH transmission carrying the SL HARQ feedback after the corresponding cellDTX-slotOffset from the beginning of the subframe in which the next/subsequent cellDTX-On DurationTimer is started/restarted/resumed/run. The drx-RetransmissionTimerSL for the corresponding HARQ process may be stopped.

For another example, if the PUCCH resource is configured, the drx-HARQ-RTT-TimerSL for the corresponding HARQ process may be started within the first symbol after the end of the corresponding PUCCH resource for the corresponding SL HARQ feedback when the PUCCH is not transmitted, after the corresponding cellDTX-SlotOffset from the beginning of the subframe in which the next/subsequent cellDTX-On DurationTimer is started/restarted/resumed/run. The drx-RetransmissionTimerSL for the corresponding HARQ process may be stopped.

For the cell DTX 'On Duration timer running/Active Time,' when the drx-HARQ-RTT-TimerSL expires, the drx-RetransmissionTimerUL for the corresponding HARQ process may be started within the first symbol after the expiration of the corresponding drx-HARQ-RTT-TimerSL.

For the cell DTX 'Off Duration timer running/non-Active Time,' if the corresponding drx-HARQ-RTT-TimerSL expires and if the PUCCH resource is configured even after the corresponding drx-HARQ-RTT-TimerSL expires, it is impossible to transmit the HARQ feedback for the corresponding HARQ process, and thus there is no need to monitor the corresponding PDCCH. Therefore, at least one of operations (to be described later) may be performed.

For example, for the cell DTX 'Off Duration timer running/non-Active Time,' when the drx-HARQ-RTT-TimerSL expires, the drx-RetransmissionTimerSL for the corresponding HARQ process may be started when the next/subsequent cellDTX-On DurationTimer is started/restarted/resumed/run. Alternatively, when the drx-HARQ-RTT-TimerSL expires, the drx-RetransmissionTimerSL for the corresponding HARQ process may be started after the corresponding cellDTX-SlotOffset from the beginning of the subframe in which the next/subsequent cellDTX-On DurationTimer is started/restarted/resumed/run after the expiration of the corresponding drx-HARQ-RTT-TimerSL. Alternatively, when the drx-HARQ-RTT-TimerSL expires, the drx-RetransmissionTimerSL for the corresponding HARQ process may be started within the first symbol after the corresponding cellDTX-SlotOffset from the beginning of the subframe in which the next/subsequent cellDTX-On DurationTimer is started/restarted/resumed/run after the expiration of the corresponding drx-HARQ-RTT-TimerSL. Alternatively, in at least one of the following cases: i) the HARQ NACK feedback for the corresponding HARQ process is transmitted on the PUCCH; ii) the HARQ NACK feedback for the corresponding HARQ process is not transmitted on the PUCCH; and iii) the PUCCH resource is not configured for the SL grant, the drx-RetransmissionTimerSL for the corresponding HARQ process may be started within the first symbol after the corresponding cellDTX-SlotOffset from the beginning of the subframe in which the next/subsequent cellDTX-On DurationTimer is started/restarted/resume/run after the expiration of the corresponding drx-HARQ-RTT-TimerSL.

### <Embodiments of the present disclosure>

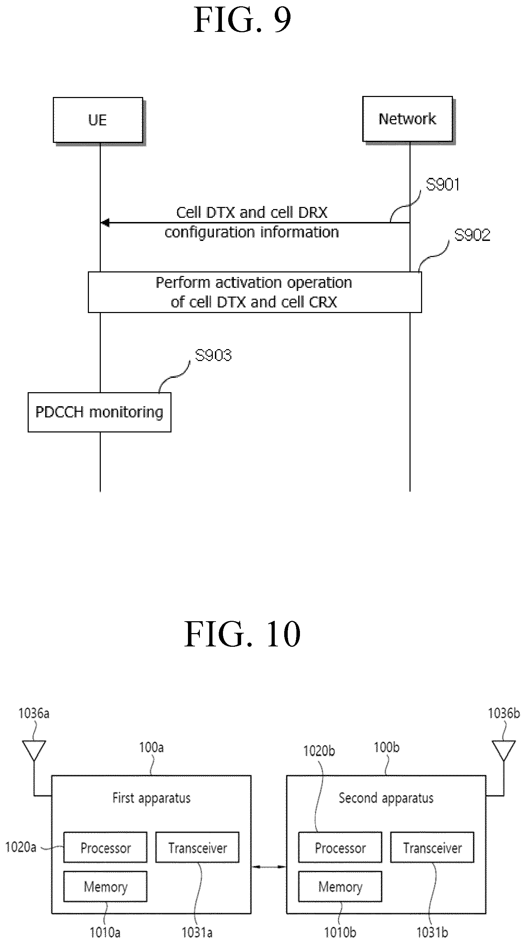

**FIG. 9** **illustrates an example of operations of a base station and a UE according to an embodiment of the present disclosure.**

Referring to FIG. 9, the base station transmits cell discontinuous transmission (DTX) and the cell discontinuous reception (DRX) configuration information to the UE. The UE receives the cell DTX and DRX configuration information (S901). Based on the cell DTX and DRX configuration information, the base station and the UE perform a cell DTX and/or cell DRX activation operation (S902). Then, the UE monitors a physical downlink control channel (PDCCH) (S903). Here, the PDCCH monitored by the UE may be performed based on the Active Time of the cell DTX.

The foregoing cell DTX and DRX configuration information may be configured with at least one parameter based on a combination between a parameter for the cell DTX and a parameter for the cell DRX, and the at least one combined parameter may include at least one of the following: i) a cell DTX-DRX cycle, ii) a cell DTX-DRX On Duration timer, iii) a cell DTX-DRX start offset, and iv) a cell DTX-DRX slot offset.

The activation operation of the cell DTX and/or the cell DRX may be performed based on radio resource control (RRC) signaling or group-common downlink control information (DCI) signaling. Here, the group-common DCI may be scrambled by a cell group specific radio network temporary identifier (RNTI) for network energy savings (NES).

Meanwhile, the Active Time may correspond to time in which the cell DTX-DRX On Duration timer is running, and the cell DTX-DRX On Duration timer may be started based on a remainder of a modulo operation obtained by dividing a value, which is obtained by adding a subframe number after multiplying a system frame number (SFN) by '10,' by a cell DTX-DRX cycle.

In addition, the cell DTX-DRX On Duration timer may start after the cell DTX-DRX slot offset from the beginning of the subframe when the remainder of the modulo operation becomes equal to the cell DTX-DRX On Duration start offset.

**FIG. 10** **shows apparatuses according to an embodiment of the disclosure.**

Referring to FIG. 10, a wireless communication system may include a first apparatus 100a and a second apparatus 100b.

The first apparatus 100a may include a base station, a network node, a transmission user equipment (UE), a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

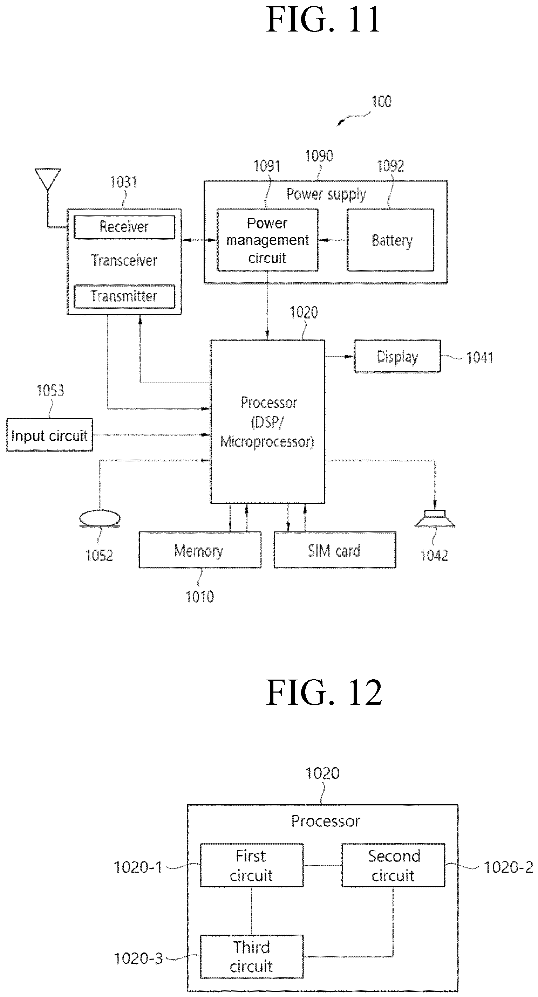

**FIG. 11** **is a block diagram showing a configuration of a terminal according to an embodiment of the disclosure.**

In particular, FIG. 11 illustrates the foregoing apparatus of FIG. 10 in more detail.

The apparatus includes a memory 1010, a processor 1020, a transceiver 1031, a power management circuit 1091, a battery 1092, a display 1041, an input circuit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management circuit 1091 manages a power for the processor 1020 and/or the transceiver 1031. The battery 1092 supplies power to the power management module 1091. The display 1041 outputs the result processed by the processor 1020. The input circuit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

**FIG. 12** **is a configuration block diagram of a processor in which the disclosure is implemented.**

Referring to FIG. 12, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP). The processor 1020 may include at least one of a digital signal processor (DSP), a central processing unit (CPU), and a graphics processing unit (GPU).

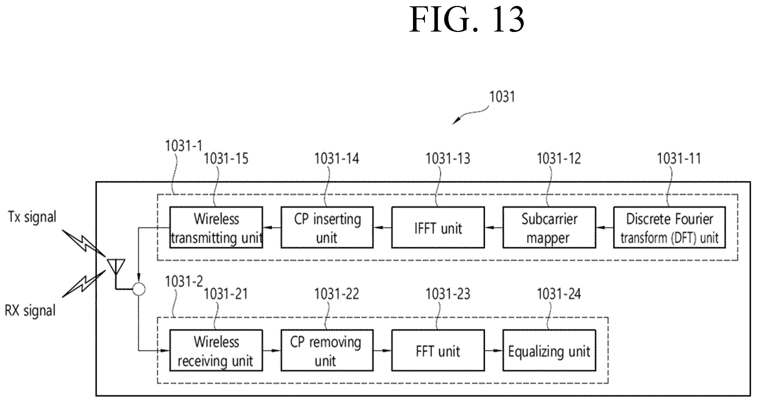

**FIG. 13** **is a detailed block diagram of a transceiver of a first apparatus shown in** **FIG. 10** **or a transceiving unit of an apparatus shown in** **FIG. 11****.**

Referring to FIG. 13, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of operating a user equipment (UE) in a wireless communication system, the method comprising:
receiving cell discontinuous transmission (DTX) and cell discontinuous reception (DRX) configuration information;
performing an activation operation of cell DTX and/or cell DRX, based on the received cell DTX and cell DRX configuration information; and
monitoring a physical downlink control channel (PDCCH) after performing the activation operation of the cell DTX and/or the cell DRX, wherein
the monitoring of the PDCCH is performed based on an active time associated with the cell DTX.

2. The method of claim 1, wherein the cell DTX and cell DRX configuration information is configured with at least one parameter based on a combination of a parameter for the cell DTX and a parameter for the cell DRX.

3. The method of claim 2, wherein the at least one combined parameter comprises at least one of a cell DTX-DRX cycle, a cell DTX-DRX On Duration timer, a cell DTX-DRX start offset, and a cell DTX-DRX slot offset.

4. The method of claim 1, wherein the activation operation of the cell DTX and/or the cell DRX is performed based on signaling of radio resource control (RRC) or signaling of group common downlink control information (DCI).

5. The method of claim 4, wherein the group common DCI is scrambled by a cell group specific radio network temporary identifier (RNTI) for network energy savings (NES).

6. The method of claim 1, wherein
the active time corresponds to a time in which a cell DTX-DRX On Duration timer is running, and
the cell DTX-DRX On Duration timer is started based on a remainder of a modulo operation obtained by dividing a value, which is obtained by adding a subframe number after multiplying a system frame number (SFN) by '10,' by a cell DTX-DRX cycle.

7. The method of claim 6, wherein the cell DTX-DRX On Duration timer starts after a cell DTX-DRX slot offset from the beginning of the subframe when the remainder of the modulo operation becomes equal to the cell DTX-DRX On Duration start offset.

8. A communication apparatus in a wireless communication system, comprising:
at least one processor; and
at least one memory configured to store instructions and operably electrically connectable to the at least one processor,
wherein operations performed based on the instructions executed by the at least one processor comprise:
receiving cell discontinuous transmission (DTX) and cell discontinuous reception (DRX) configuration information;
performing an activation operation of cell DTX and/or cell DRX, based on the received cell DTX and cell DRX configuration information; and
monitoring a physical downlink control channel (PDCCH) after performing the activation operation of the cell DTX and/or the cell DRX, wherein
the monitoring of the PDCCH is performed based on active time associated with the cell DTX.

9. The communication apparatus of claim 8, wherein the cell DTX and DRX configuration information is configured with at least one parameter based on a combination of a parameter for the cell DTX and a parameter for the cell DRX.

10. The communication apparatus of claim 9, wherein the at least one combined parameter comprises at least one of a cell DTX-DRX cycle, a cell DTX-DRX On Duration timer, a cell DTX-DRX start offset, and a cell DTX-DRX slot offset.

11. The communication apparatus of claim 8, wherein the activation operation of the cell DTX and/or the cell DRX is performed based on signaling of radio resource control (RRC) or signaling of group common downlink control information (DCI).

12. The communication apparatus of claim 11, wherein the group common DCI is scrambled by a cell group specific radio network temporary identifier (RNTI) for network energy savings (NES).

13. The communication apparatus of claim 8, wherein
the active time corresponds to a time in which a cell DTX-DRX On Duration timer is running, and
the cell DTX-DRX On Duration timer is started based on a remainder of a modulo operation obtained by dividing a value, which is obtained by adding a subframe number after multiplying a system frame number (SFN) by '10,' by a cell DTX-DRX cycle.

14. The communication apparatus of claim 13, wherein the cell DTX-DRX On Duration timer starts after a cell DTX-DRX slot offset from the beginning of the subframe when the remainder of the modulo operation becomes equal to the cell DTX-DRX On Duration start offset.
